# EUROPEAN PATENT APPLICATION

(11) **EP 3 591 547 A1**
(43) Date of publication of application: **08.01.2020**
(21) Application number: 18774545.0
(22) Date of filing: 27.02.2018
(51) Int. Cl.: G06F 17/30

(54) **QUERY OPTIMIZATION METHOD AND RELATED DEVICE**

(30) Priority: 31.03.2017 CN 201710210122
(71) Applicant: Huawei Technologies Co., Ltd., Longgang District Shenzhen, Guangdong 518129 (CN)
(72) Inventor: DENG, Yong, Shenzhen Guangdong 518129 (CN); LIU, Chenghua, Shenzhen Guangdong 518129 (CN); YANG, Yidong, Shenzhen Guangdong 518129 (CN); ZHU, Wenqi, Shenzhen Guangdong 518129 (CN)
(74) Representative: Gill Jennings & Every LLP
(86) International application number: PCT/CN2018/077425
(87) International publication number: WO 2018/177060

(57) **Abstract**

Embodiments of this application disclose a query optimization technology. A query optimization method performed by a data access node includes: receiving a query request that is used to query tenant data; searching for a cached optimal query plan for the query request; if the optimal query plan is found, using the optimal query plan as a target query plan; or if no optimal query plan is found, generating a target query plan corresponding to the query request; and submitting the target query plan to a database, where the target query plan is used by the database to query the tenant data. Compared with the prior art, in the solution provided in this application, logical access (query request) is converted into a query plan (physical data access) by the data access node rather than a database node. In addition, the optimal query plan is used for query, so as to reduce a query cost as much as possible, and improve query performance.

## Description

This application claims priority to Chinese Patent Application No. 201710210122.7, filed with the Chinese Patent Office on March 31, 2017 and entitled "QUERY OPTIMIZATION METHOD AND RELATED APPARATUS", which is incorporated herein by reference in its entirety.

### TECHNICAL FIELD

This application relates to the computer field, and more specifically, to a query optimization technology.

### BACKGROUND

In recent years, with development of network technologies and maturity of application software, software as a service (Software As A Service, SaaS) attracts more attention as a new software application mode. A SaaS vendor deploys application software in a unified manner. A tenant subscribes to an application software service from the vendor through the Internet based on an actual requirement and pays for the application software service. The tenant no longer needs to construct additional enterprise IT infrastructure, thereby effectively reducing operation and maintenance costs.

In a SaaS application implemented based on a multi-tenant single-instance architecture, a flat-wide table is used as storage space for tenant data (namely, a custom object of the tenant).

In an existing manner, when a user needs to query tenant data, the user sends an SQL query request (namely, logical SQL access) to a database node, and the database node finally needs to convert the logical SQL access into a query plan (physical data access) including one or more physical SQLs.

However, the flat-wide table stores tenant data of a plurality of tenants, and the database node does not support a scenario in which table-level data is from a plurality of tenants, that is, the database node cannot perceive that data stored in a field in the flat-wide table comes from different tenants and has different data types and distribution features, such as shaping, a string, and a null value. Therefore, a query plan obtained by the database node may not be an optimal query plan, and may even greatly affect query performance.

### SUMMARY

In view of this, an objective of embodiments of this application is to provide a query optimization method and a related apparatus, so as to resolve a problem that an existing manner cannot adapt to a multi-tenant scenario.

To achieve the foregoing objective, the embodiments of this application provide the following technical solutions.

According to an aspect, an embodiment of this application provides a query optimization method, applied to a data access node. The method includes: receiving a query request, where the query request is used to query tenant data; searching for an optimal query plan for the tenant data; if the optimal query plan is found, using the found optimal query plan as a target query plan; or if no optimal query plan is found, generating a target query plan for the tenant data; and submitting the target query plan to a database, where the target query plan is used by the database to query the tenant data. In the solutions provided in this application, logical SQL access (SQL query request) is converted into a query plan (physical data access) by the data access node rather than the database node. In addition, if the data access node finds the optimal query plan for the tenant data, the data access node submits the optimal query plan to the database as the target query plan. If the optimal query plan is not found, the data access node generates the target query plan and submits the target query plan to the database. The optimal query plan is used for query, so as to reduce a query cost as much as possible, and improve query performance.

In a possible design, the query method may further include starting an asynchronous query task. The asynchronous query task may include: determining an optional query plan for the query request, where the optional query plan includes the target query plan; if there are a plurality of the optional query plans for the query request, querying the database for a query cost of each of the optional query plans; and caching an optional query plan with a lowest query cost as an optimal query plan for the tenant data. In an example, the asynchronous query task may further include increasing a priority of an index used for the optimal query plan. There are a plurality of manners to increase the priority. For example, it may be designed that all priorities are a uniform initial value (for example, 0), and each time a priority is used for the optimal query plan, the priority is increased by a (for example, 1). In addition, it may be designed that the asynchronous query task is started when a trigger condition is met. The trigger condition may include periodic refresh during idle time, for example, when a system is idle; a large amount of table data changes, for example, after a large amount of data is imported; and query performance is greatly degraded. In this embodiment, starting the asynchronous query task may determine the optimal query plan for the tenant data. When the same query request is received next time, the optimal query plan for the tenant data is used as a target query plan. In this way, a query cost can be reduced as much as possible, and query performance can be improved. Moreover, in this embodiment, when there are a plurality of the optional query plans, the data access node obtains the query cost of each query plan by using a Cost-Based Optimization (Cost-Based Optimization, CBO) capability of the database, and selects the optional plan with the lowest query cost as the optimal query plan. In addition, associated querying may be performed based on a data flat-wide table and an index pivot table, to effectively resolve a problem that an index technology of a common database is invalid in a multi-tenant scenario and a flat-wide table model, thereby fully utilizing an index capability of the index pivot table. In addition, in this embodiment, CBO optimization is not fully implemented in a data access service, and therefore, statistics that need to be stored are limited, and some of the statistics are already reflected in object metadata of a tenant. Therefore, application layer implementation can be simplified, database query pressure can be reduced, and storage space for statistics can be reduced.

In a possible design, the step of determining the optional query plans for the SQL query request is performed after the step of submitting the target query plan to the database. In this way, generation of the optional query plans is later than determining of the target query plan. Alternatively, it may be designed that the step of determining the optional query plans for the SQL query request is performed after the step of receiving the SQL query request. In this way, generation of the optional query plans is earlier than determining of the target query plan. In other words, the optional query plans may be generated earlier than the target query plan, or may be generated later than the target query plan. This provides different implementations for query optimization.

In a possible design, the step of "generating a target query plan for the tenant data" may further include: generating the target query plan for the tenant data based on statistics of the tenant data, where the statistics include metadata of the tenant data and index metadata corresponding to the tenant data, and the index metadata includes at least a priority of an index. If the query request corresponds to a unique index, the target query plan is generated based on the unique index. If the query request corresponds to a plurality of indexes, the target query plan is generated based on an index with a highest priority. If priorities of the plurality of indexes are the same, one index is randomly selected from the plurality of indexes to generate the target query plan. This embodiment provides a specific implementation for generating the target query plan. The target query plan is generated based on a priority of an index. In this way, the generated target query plan can be closer to the optimal query plan.

In a possible design, the step of "generating a target query plan for the tenant data" may further include the following: When the SQL query request relates to associated querying of a plurality of tables, the determining the target query plan for the SQL query request includes: selecting a table that has an index as a drive table to generate the target query plan. If only one table has an index, the table having an index is used as the drive table. If at least two tables have indexes, a table with a smaller data amount is selected from the at least two tables as the drive table. In this way, the generated target query plan can be closer to the optimal query plan.

According to another aspect, an embodiment of this application provides a data access node. The data access node has functions of implementing behavior of the data access node in the foregoing method embodiments. The functions may be implemented by using hardware, or may be implemented by executing corresponding software by hardware.

According to another aspect, an embodiment of this application provides a software as a service SaaS application system, including an application node, a database node, and the foregoing data access node. The data access node has functions of implementing behavior of the data access node in the foregoing method embodiments. The functions may be implemented by using hardware, or may be implemented by executing corresponding software by hardware.

According to another aspect, this application provides a computer readable storage medium, and the computer readable storage medium stores an instruction. When the instruction is run on a computer, the computer is enabled to perform the method in the foregoing aspect.

According to another aspect, this application provides a computer program product that includes an instruction, where when the computer program product is run on a computer, the computer is enabled to perform the method in the foregoing aspect.

Compared with the prior art, in the solutions provided in this application, logical SQL access (SQL query request) is converted into a query plan (physical data access) by the data access node rather than the database node. In addition, if the data access node finds the optimal query plan for the tenant data, the data access node submits the optimal query plan to the database as the target query plan. If the optimal query plan is not found, the data access node generates the target query plan and submits the target query plan to the database. The optimal query plan is used for query, so as to reduce a query cost as much as possible, and improve query performance.

### BRIEF DESCRIPTION OF DRAWINGS

FIG. 1a and FIG. 1b are structural diagrams of examples of a SaaS application system according to an embodiment of this application;
FIG. 2a is a structural diagram of an example of a data access node according to an embodiment of this application;
FIG. 2b and FIG. 2c are structural diagrams of examples of a query apparatus according to an embodiment of this application; and
FIG. 3A and FIG. 3B, and FIG. 4 are structural diagrams of examples of a query optimization method according to an embodiment of this application.

### DESCRIPTION OF EMBODIMENTS

For reference and clarity, technical terms, acronyms, or abbreviations used in the following are summarized and explained as follows:
SQL: Structured Query Language, structured query language;
DDL: Data Definition Language, data definition language, which is a language used to describe a real-world entity stored in a database management system;
DML: Data Manipulation Language, data manipulation language, which is a language used to operate data in the database management system;
Index: an index, which is a data structure for sorting in the database management system, and is used to assist in fast query and update data in a database table;
Query plan: a query plan, which is a set of sequentially performed steps in the database management system for accessing data;
CBO: Cost-Based Optimization, Cost-Based Optimization, which is a database system query plan optimization method; and
ID: an identifier.

To facilitate understanding of the technical solutions provided in this application, a flat-wide table model, an object metadata table, and a field metadata table are first described in this specification.

The flat-wide table model is shown in Table 1 below. A plurality of (for example, 100 or 500) typeless fields are reserved in the flat-wide table model and are used as storage fields for tenant data. For example, value 0 to value 499 in the following table are the typeless fields. In addition, the flat-wide table model further includes fields that describe basic information of the tenant data, for example, a tenant ID (tenant_id), an object type ID (obj_id), and a globally unique identifier (Globally Unique Identifier, GUID).

**Table 1**

| Data | Description |
|---|---|
| tenant_id | Tenant ID |
| obj_id | Object type ID |
| Guid | Record a global ID |
| version | Version number |
| delete_time | Delete time |
| value 0 | Storage object field value |
| value 1 | Typeless, variable, and string type |
| value 2 | |
| ... | |
| value 499 | |

In addition, a set of metadata tables are needed to define the tenant data.

Main metadata tables include an object metadata table and a field metadata table.

An object metadata table model is shown in Table 2 below. The object metadata table is used to store basic metadata information of the tenant data, including a tenant ID, a name (obj_name), an object type ID, and the like.

**Table 2**

| objects | Description |
|---|---|
| obj_id | Object type ID |
| tenant_id | Tenant ID |
| obj_name | Object name |

A field metadata table model is shown in Table 3 below. The field metadata table is used to store detailed field information of the tenant data, including a field ID (field id), a name (field name), a type (data_type), a size (data size), a field number in a flat-wide table, and the like.

**Table 3**

| Fields | Description |
|---|---|
| field_id | Field ID |
| tenant_id | Tenant ID |
| obj_id | Object type ID |
| field_name | Field name |
| data_type | Field type |
| data_size | Field size |
| field_num | Field number in a flat-wide table |

It is assumed that a tenant 101 has customized an object (ACCOUNT). An object metadata table of the object (ACCOUNT) is shown in Table 4 below as an example, and a field metadata table of the object (ACCOUNT) is shown in Table 5 below as an example.

**Table 4**

| obj_id | tenant_id | obj_name |
|---|---|---|
| 201 | 101 | ACCOUNT |

**Table 5**

| field_id | tenant_id | obj_id | field_name | data_type | data_size | field_num |
|---|---|---|---|---|---|---|
| 301 | 101 | 201 | ACCOUNT_ID | int | 4 | 0 |
| 302 | 101 | 201 | ACCOUNT_NAME | varchar | 16 | 1 |
| 303 | 101 | 201 | ADDRESS | varchar | 256 | 2 |

It can be learned that customizing a data object by a tenant, for example, adding or deleting a field and changing a type, may not be performed based on a DDL operation on an entity table of a physical database, but may be implemented through a DML operation on metadata. The tenant can arbitrarily modify an object definition without affecting another tenant.

When a user needs to query tenant data, a SaaS application needs to convert, by using metadata description information, logical SQL access of the tenant based on a customized data object into physical SQL access based on a flat-wide table of data finally.

For example, in an existing manner, when the user needs to query data, the user sends an SQL query request (namely, logical SQL access) to a database node, and the database node finally needs to convert the logical SQL access into a query plan (physical data access) including one or more physical SQLs.

However, the flat-wide table stores tenant data of a plurality of tenants, and the existing database node does not support table-level data from a plurality of tenants, that is, the database node cannot perceive that data stored in a field in the flat-wide table comes from different tenants, and has different data types and distribution features. Therefore, a manner of generating the query plan by the database node is not applicable to a multi-tenant scenario.

For this reason, the embodiments of this application provide a query optimization method and a related apparatus (a query apparatus, a data access node, and a SaaS application system), so as to adapt to a case in which multi-tenant data is stored in the flat-wide table, reduce a query cost, and improve query performance.

An idea of the query optimization method is as follows:
a logical SQL access (SQL query request) is converted into a query plan (physical data access) by the data access node rather than the database node.

Specifically, after receiving the SQL request for querying tenant data, the data access node determines a target query plan. After obtaining the target query plan, the data access node submits the target query plan to a database. Subsequently, the database queries and returns the tenant data based on the target query plan.

Determining the target query plan may include the following steps:
searching for a cached optimal query plan for the SQL query request; and
if the optimal query plan is found, using the found optimal query plan as the target query plan; or if no optimal query plan is found, generating the target query plan corresponding to the SQL query request.

In the solutions provided in this application, the logical SQL access (SQL query request) is converted into the query plan (physical data access) by the data access node rather than the database node. Because the database node no longer converts the logical SQL access into the query plan, the problem that the database node does not support a scenario in which table-level data comes from a plurality of tenants can be resolved. In addition, when the optimal query plan is found, the optimal query plan is used to perform querying, so as to reduce a query cost as much as possible, and improve query performance.

The SaaS application system, the data access node, and the query apparatus are described below.

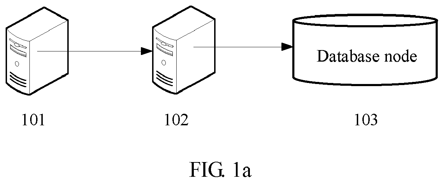

Referring to FIG. 1a, the foregoing SaaS application system may include an application node 101, a data access node 102, and a database node 103 (storing tenant data).

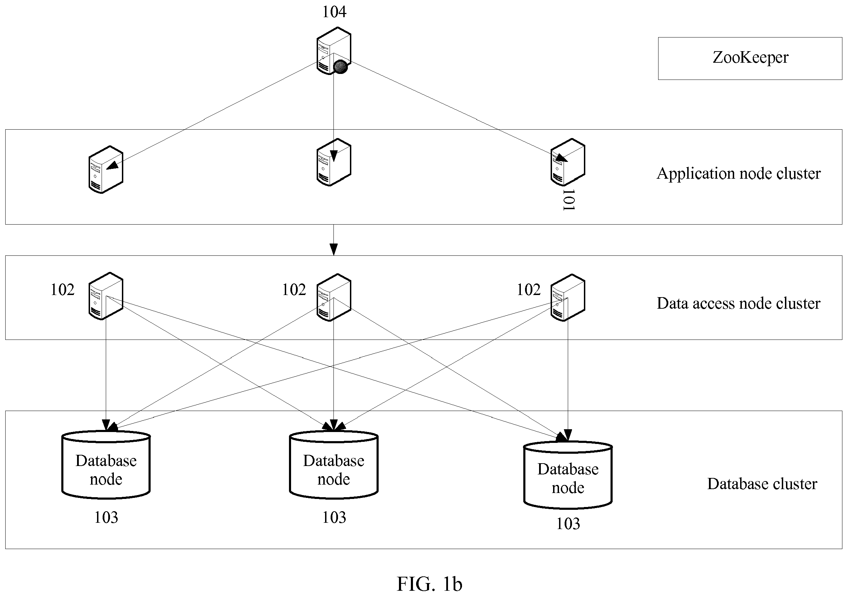

The application node 101 is mainly responsible for running a business service of the SaaS application system. In a large-capacity scenario, referring to FIG. 1b, cluster deployment may be used.

The data access node 102 is mainly responsible for running a database access service of the SaaS application system, providing a standard SQL interface, receiving a database access request of the application node 101, submitting a database query (query plan) to the database node 103, and returning a result to the application node 101. In a large-capacity scenario, referring to FIG. 1b, cluster deployment may be used.

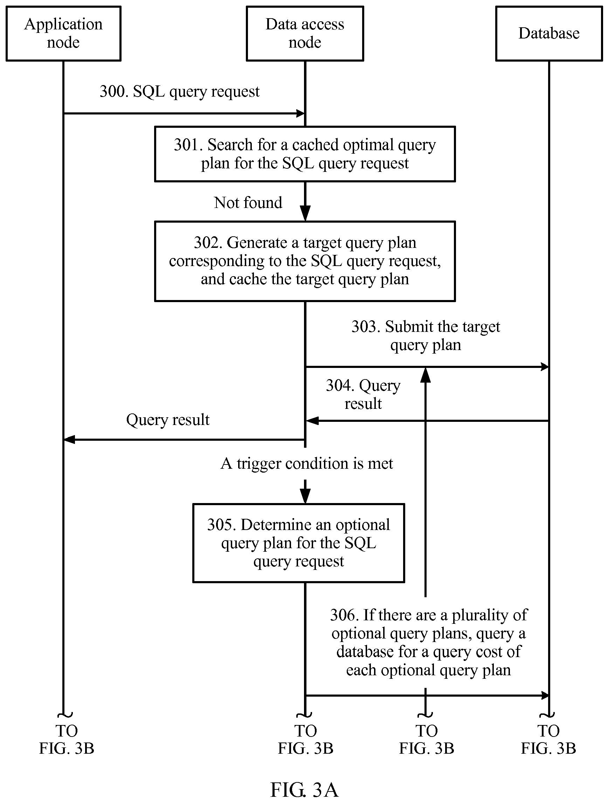

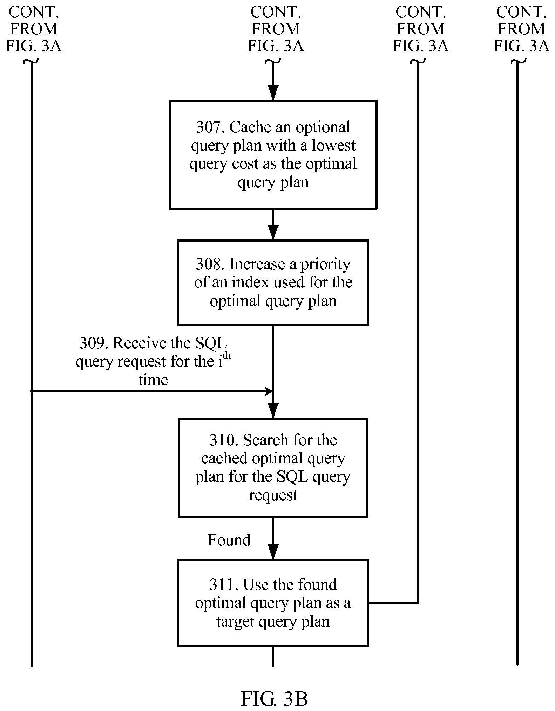

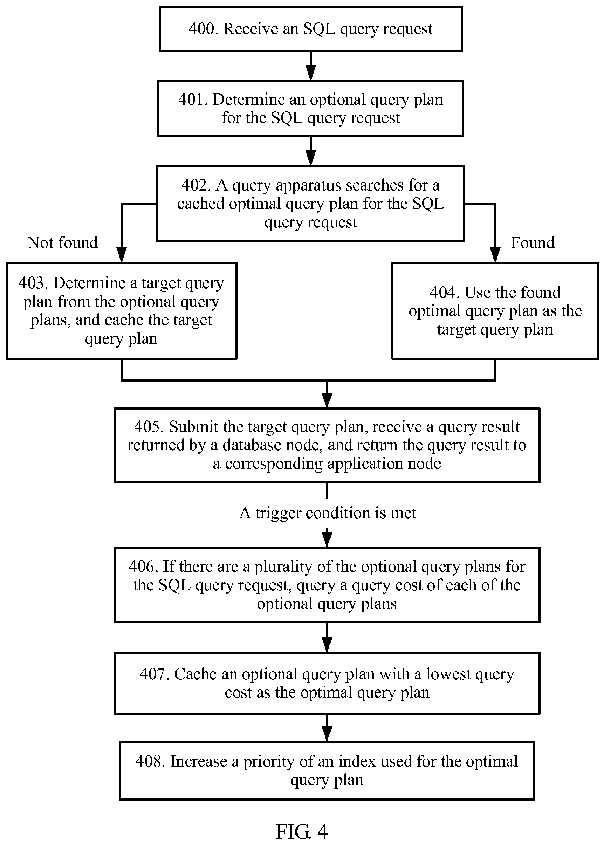

In addition, the data access node 102 may further perform a query optimization method provided in this application, for example, query optimization methods provided in the following embodiments shown in FIG. 3A and FIG. 3B, and FIG. 4.

The database node 103 is mainly responsible for a data storage access service of the SaaS application system, and a commercial database may be used, for example, Oracle and MySQL. In a large-capacity scenario, referring to FIG. 1b, cluster deployment may be used. In a multi-tenant scenario, data of each tenant is stored in a specified database node, and the database node may be specified by deploying configuration information.

In a cluster scenario, the SaaS application system may further include a load balancer 104. The load balancer 104 is mainly responsible for receiving a request (for example, a logical SQL request) from a SaaS application client, and distributing the request to an application node in an application node cluster based on load statuses of application nodes 101.

ZooKeeper: ZooKeeper is a distributed and open-source application program coordination service, and implements a unified naming service, a state synchronization service, cluster management, distributed application configuration item management, and the like.

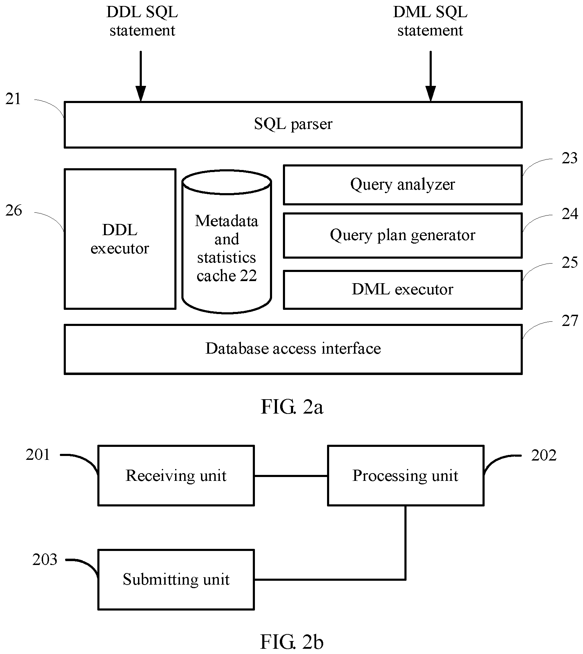

FIG. 2a shows an example of a structure of the foregoing data access node 102, including an SQL parser 21, a metadata and statistics cache 22, a query analyzer 23, a query plan generator 24, a DML executor 25, a DDL executor 26, a database access interface 27.

The SQL parser 21 is responsible for parsing an SQL query request sent by an application node 101, and generating a syntax tree.

The SQL query request herein may include a DDL SQL statement and a DML SQL statement.

It should be noted that this application focuses on execution of the DML SQL statement. Therefore, if there is no special declaration, all subsequent SQL query requests refer to DML SQL statements.

The metadata and statistics cache 22 is responsible for caching metadata and statistics on the data access node 102, where the metadata is loaded from a database when a database access service is started, and the statistics are collected and stored by a data access service in real time.

The query analyzer 23 is responsible for performing query analysis based on the syntax tree, and the metadata and statistics cache, to obtain a query analysis result.

The query plan generator 24 may be responsible for determining the target query plan mentioned above. More specifically, when no optimal query plan is found, the target query plan may be generated based on the query analysis result.

In addition, the query plan generator 24 may further determine an optional query plan for the SQL query request, query the database for a query cost of each of the optional query plans when there are a plurality of the optional query plans, and cache an optional query plan with a lowest query cost as the optimal query plan for the SQL query request.

The DML executor 25 is responsible for executing the target query plan, receiving a query result returned by a processing database, and returning the query result to the application node 101.

The DDL executor 26 is responsible for executing the DDL SQL statement (DDL request) sent by the application node 101.

The database access interface 27 provides an access interface to various heterogeneous databases.

The foregoing query apparatus may be deployed in the data access node 102 in a form of hardware or software.

FIG. 2b shows an example of a structure of the foregoing query apparatus, including a receiving unit 201, a processing unit 202, and a submitting unit 203.

The receiving unit 201 may be configured to receive an SQL query request, where the SQL query request is used to query tenant data.

The receiving unit 201 may implement functions of the foregoing SQL parser 21.

The processing unit 202 is configured to:
search for a cached optimal query plan for the SQL query request; and
if the optimal query plan is found, use the optimal query plan as a target query plan; or if no optimal query plan is found, generate a target query plan corresponding to the SQL query request.

The processing unit 202 may implement functions of the foregoing query analyzer 23 and the foregoing query plan generator 24.

The submitting unit 203 is configured to: submit the target query plan to a database, and return a query result to an application node 101.

The submitting unit 203 may implement functions of the foregoing DML executor 25.

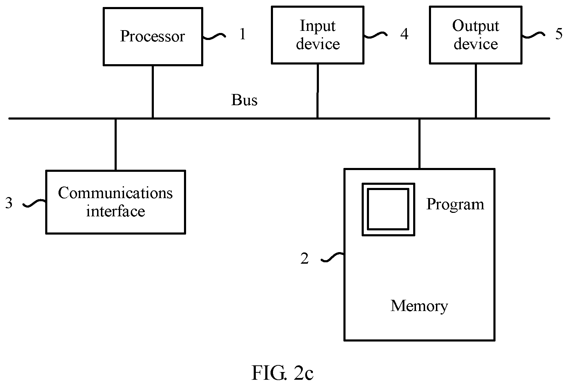

FIG. 2c shows another example of a structure of the foregoing query apparatus, including:
a bus, a controller/processor 1, a memory 2, and a communication interface 3.

Optionally, the control terminal device may further include an input device 4 and an output device 5.

The processor 1, the memory 2, the input device 4, and the output device 5 are connected to each other by using the bus.

The bus may include a channel used for transmitting information between components of a computer system.

The controller/processor 1 may be a general purpose processor such as a general-purpose central processing unit (CPU), a network processor (Network Processor, NP), or a microprocessor, or may be an application-specific integrated circuit (application-specific integrated circuit, ASIC) or one or more integrated circuits that are configured to control program execution of the solutions of this application. Alternatively, the controller/processor 1 may be a digital signal processor (Digital Signal Processor, DSP), a field-programmable gate array (Field-Programmable Gate Array, FPGA) or another programmable logic device, a discrete gate or a transistor logic device, or a discrete hardware component. Alternatively, the controller/processor 1 may be a combination of processors implementing a computing function, for example, a combination of one or more microprocessors or a combination of the DSP and the microprocessor.

The processor 1 may be configured to implement functions of the foregoing processing unit 202.

The memory 2 stores a program used to execute the solutions of this application, and may also store an operating system and another application program. Specifically, the program may include program code, and the program code includes a computer executable instruction. More specifically, the memory 2 may be a read-only memory (read-only memory, ROM), an another-type static storage device that can store static information and instructions, a random access memory (random access memory, RAM), an another-type dynamic storage device that can store information and instructions, a magnetic disk storage, or the like.

The input device 4 may include a terminal device that receives data and information entered by a user, such as a keyboard, a mouse, a camera, a scanner, a light pen, a voice input terminal device, and a touchscreen.

The output device 5 may include a terminal device that allows output of information to the user, for example, a screen unit.

The communication interface 3 may include a terminal device that uses any transceiver, to support the control terminal device in communicating with another device or a communications network. The communication interface 3 may be configured to implement functions of the foregoing receiving unit 201 and the foregoing submitting unit 203.

It may be understood that FIG. 2b shows only a simplified design of the control terminal device. In actual application, the control terminal device may include any quantity of transmitters, receivers, processors, controllers, memories, communication interfaces, and the like, and all control terminal devices that can implement this application fall within the protection scope of this application.

The processor 1 performs the program stored in the memory 2, and invokes another device, to implement query optimization methods provided in the following embodiments shown in FIG. 3A and FIG. 3B, and FIG. 4.

As a key data structure in a database system, an index plays an important role in query optimization of the database system. Quick access to a record in a physical database table can be implemented by using the index.

In practice, one logical SQL access may correspond to a plurality of query plans, for example, when there are a plurality of indexes, one logical SQL access corresponds to a plurality of query plans.

However, how to determine an optimal query plan is a problem that needs to be emphatically resolved in a query optimization technology.

Currently, a mainstream universal database system, such as Oracle, implements query optimization through cost-based CBO. An implementation principle of CBO is calculating costs for different query plans based on a series of internal database statistics, and selecting a query plan with a lowest cost from the query plans as the optimal query plan.

However, a flat-wide table stores tenant data of a plurality of tenants, and the existing database node does not support a scenario in which table-level data comes from a plurality of tenants, that is, the database node cannot perceive that data stored in a field in the flat-wide table comes from different tenants, and has different data types and distribution features.

Therefore, although a database index may be created in the existing manner to improve query performance, the database index can only be created for full table data, and cannot meet a requirement for creating an index for only specified tenant data in a multi-tenant scenario.

For this reason, an index pivot table is introduced to meet the requirement for creating an index for specified tenant data.

Structures of the index pivot table are shown in Table 6 and Table 7 below, and support a non-unique index and a unique index respectively.

String_value, num_value, and date_value fields in the index pivot table respectively store a string, a numerical value, and a date type field value, and non-unique indexes are created for these fields. Unique indexes are created for these fields in a unique index pivot table.

**Table 6**

| Index Pivot | Description |
|---|---|
| tenant_id | Tenant ID |
| obj_id | Object type ID |
| field_num | Field number in a flat-wide table |
| Guid | Record a global Guid |
| string_value | String value |
| num_value | Numerical value |
| date_value | Date value |

**Table 7**

| Unique Index Pivot | Description |
|---|---|
| tenant_id | Tenant ID |
| obj_id | Object type ID |
| field_num | Field number in a flat-wide table |
| Guid | Record a global Guid |
| string_value | String value |
| num_value | Numerical value |
| date_value | Date value |

In addition, a set of metadata tables, including an index metadata table (indexes) and an index field table (index_fields), are needed to define data in the index pivot table.

A model of the index metadata table is shown in Table 8 below, and a model of the index field table is shown in Table 9 below.

**Table 8**

| Indexes | Description |
|---|---|
| index_id | Index ID |
| tenant_id | Tenant ID |
| obj_id | Object type ID |

| index_name | Index name |
|---|---|
| index_type | Index type |
| status | Index status |
| create_time | Creation time |
| update_time | Update time |

**Table 9**

| index_fields | Description |
|---|---|
| index_id | Index ID |
| tenant_id | Tenant ID |
| obj_id | Object type ID |
| field_id | Field ID |

For example, it is assumed that an account data object of a tenant 101 stored in the flat-wide table is shown in Table 10 below. It is assumed that the tenant specifies the ACCOUNT_NAME field (value 0 field) of the object (ACCOUNT) for creating a non-unique index. In this case, the index metadata table (indexes) is shown in Table 11 below, and the index pivot table is shown in Table 12 below.

**Table 10**

| tenant_id | obj_id | Guid | version | delete_time | value 0 | value 1 | value 2 |
|---|---|---|---|---|---|---|---|
| 101 | 201 | 1000001 | V1 | null | ACCID_1 | Tom | Nanjing |
| 101 | 201 | 1000002 | V1 | null | ACCID_2 | Jack | Shanghai |
| 101 | 201 | 1000003 | V1 | null | ACCID_3 | Mary | Beijing |
| 101 | 201 | 1000004 | V1 | null | ACCID_4 | Penny | Hongkong |

**Table 11**

| index_id | tenant_id | obj_id | index_name | index_type | status | create_time | delete_time |
|---|---|---|---|---|---|---|---|
| 401 | 101 | 201 | INDEX_ ACCOUN T | Non-Unique | created | 2016-09-2 6 00:00:00 | null |

**Table 12**

| tenant_id | obj_id | field_num | Guid | string_value | num_value | date_value |
|---|---|---|---|---|---|---|
| 101 | 201 | 0 | 1000001 | ACCID_1 | Null | Null |
| 101 | 201 | 0 | 1000002 | ACCID_2 | Null | Null |
| 101 | 201 | 0 | 1000003 | ACCID_3 | Null | Null |
| 101 | 201 | 0 | 1000004 | ACCID_4 | Null | Null |

Although the index pivot table can meet the requirement for creating an index for only specified tenant data in a multi-tenant scenario, the database node cannot perceive an index pivot table mechanism of an application layer.

To resolve this problem, in an existing manner, a SaaS system may implement a set of statistics collection, maintenance and query optimization mechanism at an application layer of the SaaS system. Specifically, the SaaS system maintains a complete set of optimization statistics based on a tenant, a user group (a user belongs to the tenant), and a user level. The optimization statistics can reflect a row quantity of records that may be accessed by a specific query. In addition, the SaaS system also maintains statistics of indexes created by tenants, which can reflect a non-null value of an index field, quantity histogram distribution of different values, and the like.

Costs of various possible physical SQLs (query plan) are calculated, and a physical SQL (query plan) with a lowest cost is selected as a final physical SQL (query plan) to be submitted to the database.

However, the existing manner does not fully utilize a CBO capability (including statistics, a mature cost evaluation algorithm, and the like) of the database. This is a waste of the database capability.

In addition, the existing manner further has the following disadvantages.

Collection and maintenance of various statistics and CBO are all implemented at the application layer, and this increases implementation complexity of the system;
excessively high frequency of collecting optimization statistics increases pressure of the database, and excessively low frequency of collecting optimization statistics may result in long-term invalidity of statistics; and
in a scenario of small- and medium-sized tenants, when there are a relatively large quantity of tenants, users, and custom objects, relatively large storage space is required to store a large amount of statistical data.

To resolve the problem that the existing manner does not fully utilize the CBO capability of the database, FIG. 3A and FIG. 3B show an example of a process of the foregoing query optimization method. In this embodiment, an example in which an SQL query request is received for the first time and the same SQL query request is received for the i^{th} time is used for description.

The example of the process includes the following steps.

300. A data access node receives, for the first time, an SQL request (namely, a DML SQL statement) for querying tenant data.

The SQL query request is sent by a user by using a database access service of the foregoing application node.

It should be noted that, although the tenant data is stored in a flat-wide table, for a user, what is seen by the user is a logical table rather than the flat-wide table. For example, the account data object of the tenant 101 in the foregoing flat-wide table is a logical account table for the user.

For example, the user attempts to query IDs, names, and addresses in all records with a name "ABC" in the logical account table. In this case, a logical SQL statement of the user query operation is as follows:

```
          SELECT ACCOUNT_ID, ACCOUNT NAME, ADDRESS
          FROM ACCOUNT
          WHERE ACCOUNT NAME = 'ABC'.
```

More specifically, step 300 may be performed by the foregoing receiving unit 201.

301. A query apparatus of the data access node searches for a cached optimal query plan for the SQL query request; and if the optimal query plan is not found, perform step 302, or if the optimal query plan is found, perform step 311.

If the SQL query request is not received for the first time, the optimal query plan for the SQL query request may be cached. However, the SQL request is received for the first time in step 300, and therefore the optimal query plan cannot be found. Step 302 is performed after this step.

More specifically, step 301 may be performed by the processing unit 202 of the foregoing query apparatus.

302. The data access node generates a target query plan corresponding to the SQL query request, and caches the target query plan.

The data access node may generate the target query plan based on statistics of the tenant data.

A data access service of the data access node may be enabled to maintain basic statistics at a tenant level. The basic statistics include:
table information (including metadata of the tenant data), such as a field type, a size, and a data amount; and
index information (including index metadata), such as an index type (uniqueness or non-uniqueness), an index field type, and an index priority.

It should be noted that in this embodiment, CBO optimization is not fully implemented in the data access service, and therefore, statistics that need to be stored are limited, and some of the statistics are already reflected in object metadata of a tenant.

The statistics may be permanently stored in a physical database, and cached in a memory of the data access service, so as to facilitate access acceleration.

More specifically, the data access node may perform query analysis based on the metadata and the statistics cache to obtain a query analysis result, and determine the target query plan based on the query analysis result.

The query analysis result may include a to-be-queried field in a logical table, a corresponding field in a specific table in the physical database, an index corresponding to a field in the physical database, and the like.

For example, the logical SQL statement in step 300 is used as an example, and it is assumed that the ACCID_4 in Tables 10 to 12 is ABC, the query analysis result may be obtained, including:
an ACCOUNT_ID field in the logical table ACCOUNT of a tenant whose ID is 101, a value 0 field in a corresponding flat-wide table (DATA D), and a GUID corresponding to the field;
an ACCOUNT_NAME field in the logical table ACCOUNT of the tenant whose ID is 101, and a value 1 field in a corresponding flat-wide table; and
an ADDRES field in the logical table ACCOUNT of the tenant whose ID is 101, and a value 2 field in a corresponding flat-wide table.

In addition, it may be further learned that tenant data with the tenant ID of 101 and the obj_id of 201 corresponds to an index table INDEXES I. In addition, the tenant ID in the flat-wide table is a tenant ID in the INDEXES I, the obj_id in the flat-wide table is an obj_id in the INDEXES I, and the GUID in the flat-wide table is a GUID in the INDEXES I.

In addition, if an index is created in the ACCOUNT_NAME field in the logical table ACCOUNT, the query analysis result may further include an index priority of the index, and the like.

In an example, after the query analysis result is obtained, the target query plan may be determined according to the following rules.
1. If the SQL query request is corresponding to a unique index, the target query plan is generated based on the unique index.
2. If the SQL query request is corresponding to a plurality of indexes, the target query plan is generated based on an index with a highest priority, and if priorities of the plurality of indexes are the same, an index is randomly selected to generate the target query plan.
   For example, the SQL query request is corresponding to indexes A and B. If a priority of index A is higher, the target query plan is generated based on index A. However, if priorities of the two indexes are the same, an index is randomly selected to generate the target query plan.
3. When associated querying is performed in a plurality of tables, a table that has an index is selected as a drive table to generate the target query plan.

If only one table has an index, the table having an index is used as the drive table. If at least two tables have indexes, a table that has a smaller data amount is selected as the drive table.

For example, associated querying is performed in table A and table B, where table A has an index, and table B has no index. In this case, table A is selected as the drive table to generate the target query plan.

However, if both table A and table B have indexes, and a data amount of table A is less than that of table B, table A is selected as the drive table.

More specifically, the smaller data amount may refer to a smaller amount of data included in the table, or may refer to a smaller amount of data that meets a query condition.

A smaller amount of data included in the table is used as an example. If table A includes 100 records, and table B includes 1000 records, table A is selected as the drive table.

A smaller amount of data that meets the query condition is used as an example. If there are 10 records that meet the query condition in table A, and there are 1000 records that meet the query condition in table B, table A is selected as the drive table.

In an example, step 302 may be performed by the processing unit 202 of the foregoing query apparatus.

303. The data access node submits the generated target query plan to a database.

More specifically, step 303 may be performed by the submitting unit 203 of the foregoing query apparatus.

After receiving the target query plan, a database node queries the tenant data in the flat-wide table based on the target query plan.

As mentioned above, the target query plan includes one or more physical SQLs. The database node optimizes the physical SQL based on a CBO capability of the database node, and finally determines an internal execution path of the database.

304. The data access node receives a query result returned by a database node, and returns the query result to a corresponding application node.

More specifically, step 304 may be performed by the submitting unit 203 or the processing unit 202 of the foregoing query apparatus.

305. The data access node determines an optional query plan for the SQL query request.

More specifically, step 305 may be performed by the processing unit 202 of the foregoing query apparatus.

The data access node determines the optional query plans (the target query plan is also used as an optional query plan) based on statistics.

When there are a plurality of indexes in the tenant data, a plurality of optional query plans are generated.

The example in step 302 is still used. If indexes are created for two fields "num_value" and "string value" of the tenant data, two optional query plans are generated based on the two indexes. One of the two optional query plans is as follows:

```
          SELECT D.VALUE0 AS ACCOUNT_ID, D.VALUE1 AS
          ACCOUNT NAME,
                   D.VALUE2 AS ADDRESS
          FROM DATA D, INDEXES I
          WHERE D.TENANT_ID = 101 AND D.OBJ_ID = 201 AND
          D.TENANT_ID = I.TENANT_ID AND D.OBJ_ID = I.OBJ_ID AND
          D.GUID = I.GUID AND
          I.STRING VALUE = 'ABC', and
          the other one is as follows:
          SELECT D.VALUE0 AS ACCOUNT_ID, D.VALUE1 AS
          ACCOUNT NAME,
                   D.VALUE2 AS ADDRESS
          FROM DATA D, INDEXES I
          WHERE D.TENANT_ID = 101 AND D.OBJ_ID = 201 AND
          D.TENANT_ID = I.TENANT_ID AND D.OBJ_ID = I.OBJ_ID AND
          D.GUID = I.GUID AND
          I.NUMVALUE = 1000001
```

306. If there are a plurality of the optional query plans for the SQL query request, the data access node queries the database for a query cost of each of the optional query plans.

Step 306 may be performed by the processing unit 202 of the foregoing query apparatus.

The example in step 305 is still used. The data access node queries the database for a query cost of the two optional query plans one by one. The query cost herein may be a comprehensive cost in terms of time, resource consumption, and other aspects.

Generally, the data access node first queries a query cost of one optional query plan, and then queries a query cost of a next optional plan after the database returns the query cost.

An SQL query statement for the first optional query plan is as follows:

```
          EXPLAIN SELECT D.VALUE0 AS ACCOUNT_ID, D.VALUE1 AS
          ACCOUNT NAME,
                   D.VALUE2 AS ADDRESS
          FROM DATA D, INDEXES I
          WHERE D.TENANT_ID = 101 AND D.OBJ_ID = 201 AND
          D.TENANT_ID = I.TENANT_ID AND D.OBJ_ID = I.OBJ_ID AND
          D.GUID = I.GUID AND
          I.STRINGVALUE = 'ABC'.
```

An SQL query statement for the second optional query plan is as follows:

```
          EXPLAIN SELECT D.VALUE0 AS ACCOUNT_ID, D.VALUE1 AS
          ACCOUNT NAME,
                   D.VALUE2 AS ADDRESS
          FROM DATA D, INDEXES I
          WHERE D.TENANT_ID = 101 AND D.OBJ_ID = 201 AND
          D.TENANT_ID = I.TENANT_ID AND D.OBJ_ID = I.OBJ_ID AND
          D.GUID = I.GUID AND
          I.NUMVALUE = 1000001
```

After the query costs of the two optional query plans are obtained, the query costs can be compared.

It is assumed that the query costs of the two optional query plans are Cost 1 and Cost 2 respectively. If Cost 2 < Cost 1, it indicates that the query cost of the second optional query plan is lower based on CBO analysis of the database, and a better internal database execution plan can be obtained based on the second optional query plan.

307. The data access node caches an optional query plan with a lowest query cost as an optimal query plan for the SQL query request.

In addition, if the target query plan is different from the optimal query plan, the target query plan may be set to be invalid.

When the same SQL query request is received again, the cached optimal query plan for the SQL query request is used as a target query plan, to obtain better query performance during next query.

It can be learned that when there are a plurality of the optional query plans, in this embodiment, the optimal query plan is obtained by using a Cost-Based Optimization (Cost-Based Optimization, CBO) capability of the database. Compared with the existing manner, the CBO capability of the database is fully utilized in this embodiment.

Step 307 may be performed by the processing unit 202 of the foregoing query apparatus.

308. The data access node increases a priority of an index used for the optimal query plan.

It is assumed that optional query plan A is generated based on index A, and optional query plan B is generated based on index B. If optional query plan A is used as the optimal query plan, a priority of index A is increased.

There are a plurality of manners to increase the priority. For example, it may be designed that all priorities are a uniform initial value (for example, 0), and each time a priority is used for the optimal query plan, the priority is increased by a (for example, 1).

Step 308 may be performed by the processing unit 202 of the foregoing query apparatus.

It should be noted that steps 305 to 308 may be collectively referred to as an asynchronous query optimization task.

In an example, the asynchronous query optimization task may be started when a trigger condition is met.

The trigger condition may include:
A: periodic refresh during idle time, for example, when a system is idle;
B: a large amount of table data changes, for example, after a large amount of data is imported; and
C: query performance is greatly degraded.

309. The data access node receives the SQL request for the i^{th} time (not the first time).

Step 309 is similar to step 300. Details are not described herein again.

310. The query apparatus of the data access node searches for the cached optimal query plan for the SQL query request; and if the optimal query plan is not found, perform step 302, or if the optimal query plan is found, perform step 311.

The same SQL request is already received for the i^{th} time rather than the first time. Therefore, step 311 is performed after step 310.

Step 310 is similar to step 301. Details are not described herein again.

311. The data access node uses the found optimal query plan as the target query plan, and go back to step 303.

In an example, step 311 may be performed by the processing unit 202 of the foregoing query apparatus.

It can be learned that in this embodiment, when there are a plurality of the optional query plans, the data access node obtains the query cost of each query plan by using the Cost-Based Optimization (Cost-Based Optimization, CBO) capability of the database, and selects the optional plan with the lowest query cost as the optimal query plan. In addition, associated querying may be performed based on a data flat-wide table and an index pivot table, to effectively resolve a problem that an index technology of a common database is invalid in a multi-tenant scenario and a flat-wide table model, thereby fully utilizing an index capability of the index pivot table.

In addition, in this embodiment, CBO optimization is not fully implemented in the data access service, and therefore, statistics that need to be stored are limited, and some of the statistics are already reflected in object metadata of a tenant. Therefore, application layer implementation can be simplified, database query pressure can be reduced, and storage space for statistics can be reduced.

FIG. 4 shows another example of a process of the foregoing query optimization method.

In this embodiment, another occasion for determining an optional query plan is described.

The example of the process includes the following steps.

400. A data access node receives an SQL request for querying tenant data.

For related descriptions, refer to the descriptions of step 300 in the foregoing embodiment, and details are not described herein again.

401. The data access node determines an optional query plan for the SQL query request.

Step 401 is similar to the foregoing step 305. Details are not described herein again.

402. A query apparatus of the data access node searches for a cached optimal query plan for the SQL query request; and if the optimal query plan is not found, perform step 403, or if the optimal query plan is found, perform step 404.

Step 402 is similar to step 301 in the foregoing embodiment. Details are not described herein again.

403. The data access node determines a target query plan from the optional query plans, and caches the target query plan.

In an example, the target query plan may be determined in the following manners.
1. If only one optional query plan uses an index, the optional query plan is selected as the target query plan.
2. If there are a plurality of the optional query plans that use indexes, an optional query plan with a highest index priority is used as the target query plan; and if priorities of the plurality of indexes are the same, one optional query plan is randomly selected as the target query plan.
3. When associated querying is performed in a plurality of tables, a query plan that has an index in a drive table is selected as the target query plan.

If a drive table of only one optional query plan has an index, the optional query plan is selected as the target query plan.

However, if drive tables of at least two optional query plans have indexes, a table with a smaller data amount is selected as an optional query plan of the drive table, and the optional query plan is used as the target query plan.

This part is similar to the manner of "determining a target query plan" in the foregoing embodiment. Details are not described herein again.

404. The data access node uses the found optimal query plan as the target query plan.

Step 404 is similar to step 311 in the foregoing embodiment. Details are not described herein again.

405. The data access node submits the target query plan to a database, receives a query result returned by a database node, and returns the query result to a corresponding application node.

For details, refer to the descriptions in steps 303 and 304, and details are not described herein again.

406. If there are a plurality of the optional query plans for the SQL query request, the data access node queries the database for a query cost of each of the optional query plans.

For details, refer to the descriptions in the foregoing step 306, and details are not described herein again.

In addition, 406 may be performed when the foregoing trigger condition is met.

407. The data access node caches an optional query plan with a lowest query cost as an optimal query plan for the SQL query request.

For details, refer to the descriptions in the foregoing step 307, and details are not described herein again.

408. The data access node increases a priority of an index used for the optimal query plan.

For details, refer to the descriptions in the foregoing step 308, and details are not described herein again.

In this embodiment, generation of the optional query plans is earlier than determining of the target query plan, and another method for implementing query optimization is provided.

Method or algorithm steps described in combination with the content disclosed in this application may be implemented by hardware, or may be implemented by a processor by executing a software instruction. The software instruction may be formed by a corresponding software module. The software module may be located in a RAM memory, a flash memory, a ROM memory, an EPROM memory, an EEPROM memory, a register, a hard disk, a removable hard disk, a CD-ROM, or a storage medium of any other form known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in user equipment. Certainly, the processor and the storage medium may exist in the user equipment as discrete components.

A person skilled in the art should be aware that in the foregoing one or more examples, functions described in this application may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The objectives, technical solutions, and benefits of this application are further described in detail in the foregoing specific embodiments. It should be understood that the foregoing descriptions are merely specific embodiments of this application, but are not intended to limit the protection scope of this application. Any modification, equivalent replacement, or improvement made based on the technical solutions in this application shall fall within the protection scope of this application.

## Claims

1. A query optimization method, applied to a data access node, comprising:
receiving a query request, wherein the query request is used to query tenant data;
searching for an optimal query plan for the tenant data;
if the optimal query plan is found, using the found optimal query plan as a target query plan; or if no optimal query plan is found, generating a target query plan for the tenant data; and
submitting the target query plan to a database, wherein the target query plan is used by the database to query the tenant data.

2. The method according to claim 1, further comprising:
determining an optional query plan for the query request, wherein the optional query plan comprises the target query plan;
if there are a plurality of the optional query plans for the query request, querying the database for a query cost of each of the optional query plans;
caching an optional query plan with a lowest query cost as an optimal query plan for the tenant data; and
when the query request is received again, using the optimal query plan for the tenant data as a target query plan.

3. The method according to claim 2, wherein after the caching an optional query plan with a lowest query cost, the method further comprises: increasing a priority of an index used for the optional query plan with a lowest query cost.

4. The method according to claim 3, wherein the generating a target query plan for the tenant data comprises:
generating the target query plan for the tenant data based on statistics of the tenant data, wherein the statistics comprise metadata of the tenant data and index metadata corresponding to the tenant data, and the index metadata comprises at least a priority of an index.

5. The method according to claim 4, wherein the generating the target query plan for the tenant data based on statistics of the tenant data comprises:
if the query request corresponds to a plurality of indexes, generating the target query plan based on an index with a highest priority; and if priorities of the plurality of indexes are the same, randomly selecting an index from the plurality of indexes to generate the target query plan.

6. A query optimization apparatus, comprising:
a receiving unit, configured to receive a query request, wherein the query request is used to query tenant data;
a processing unit, configured to:
search for an optimal query plan for the tenant data; and
if the optimal query plan is found, use the optimal query plan as a target query plan; or if no optimal query plan is found, generate a target query plan for the tenant data; and
a submitting unit, configured to submit the target query plan to a database, wherein the target query plan is used by the database to query the tenant data.

7. The apparatus according to claim 6, wherein the processing unit is further configured to:
determine an optional query plan for the query request, wherein the optional query plan comprises the target query plan;
if there are a plurality of the optional query plans for the query request, query the database for a query cost of each of the optional query plans;
cache an optional query plan with a lowest query cost as an optimal query plan for the tenant data; and
when the query request is received again, use the optimal query plan for the tenant data as a target query plan.

8. The apparatus according to claim 7, wherein the processing unit is further configured to:
after the optional query plan with a lowest query cost is cached, increase a priority of an index used for the optional query plan with a lowest query cost.

9. The apparatus according to claim 8, wherein in the aspect of generating a target query plan for the tenant data, the processing unit is specifically configured to:
generate the target query plan for the tenant data based on statistics of the tenant data, wherein the statistics comprise metadata of the tenant data and index metadata corresponding to the tenant data, and the index metadata comprises at least a priority of an index.

10. The apparatus according to claim 9, wherein in the aspect of generating the target query plan for the tenant data based on statistics of the tenant data, the processing unit is specifically configured to:
if the query request corresponds to a plurality of indexes, generate the target query plan based on an index with a highest priority; and if priorities of the plurality of indexes are the same, randomly select an index from the plurality of indexes to generate the target query plan.

11. A data access node, comprising the query optimization apparatus according to any one of claims 6 to 10.

12. A software as a service SaaS application system, comprising an application node, a database node, and the data access node according to claim 12.
